# FASCICULE DE BREVET EUROPEEN

(11) **EP 1 051 573 B1**
(45) Date de publication et mention de la délivrance du brevet: **20.08.2003**
(21) Numéro de dépôt: 99956148.3
(22) Date de dépôt: 25.11.1999
(51) Int. Cl.: F16B 19/14

(54) **PROCEDE POUR LA FIXATION D'UN QUELCONQUE ARTICLE A UN QUELCONQUE SUPPORT, ET ACCESSOIRE DE FIXATION PROPRE A LA MISE EN OEUVRE DE CE PROCEDE**
VERFAHREN ZUM BEFESTIGEN IRGENDEINES GEGENSTANDES AN IRGENDEINEM TRÄGER UND ZUBEHÖR ZUR DURCHFÜHRUNG VON DIESEM VERFAHREN
METHOD FOR FIXING A PARTICULAR ARTICLE ON A PARTICULAR SUPPORT, AND FIXING ACCESSORY FOR IMPLEMENTING SAID METHOD

(30) Priorité: 30.11.1998 FR 9815022
(43) Date de publication de la demande: 15.11.2000
(73) Titulaire: LEGRAND, F-87000 Limoges (FR); LEGRAND SNC, F-87000 Limoges (FR)
(72) Inventeur: LE BIHAN, Loic, F-76140 Petit Quevilly (FR)
(74) Mandataire: Santarelli
(86) Numéro de dépôt international: FR9902915
(87) Numéro de publication internationale: WO00032949

(56) Documents cités:
- DE-A- 2 918 349
- DE-B- 1 196 903
- US-A- 5 443 345
- US-A- 5 569 010
- US-A- 5 624 220

## Description

La présente invention concerne un procédé et un accessoire pour la fixation d'un quelconque article à un quelconque support.

Elle vise plus particulièrement le cas où cette fixation fait intervenir un accessoire de fixation spécifiquement prévu à cet effet.

Cela est le cas, par exemple, dans la demande de brevet britannique publiée sous le No 2 099 289, dans laquelle une lyre est mise en oeuvre pour la fixation d'une tubulure à une quelconque paroi, et dans la demande de brevet français publiée sous le No 2 754 874, dans laquelle, pour la fixation d'un collier de serrage à une telle paroi, il est mis en oeuvre une embase appropriée.

Mais cela peut également être le cas pour la fixation d'autres articles, et, par exemple, pour la fixation d'une goulotte, ou, plus précisément, pour la fixation du socle d'une telle goulotte.

Il est connu, par ailleurs, que la fixation d'un article à un support se fasse à l'aide d'un outil présentant un nez tubulaire par lequel il est apte à propulser à travers lui, c'est-à-dire à travers cet article, un quelconque organe de fixation, et, par exemple, un simple clou, parfois appelé tampon.

Un outil de ce type se trouve notamment décrit dans le document DE-A-2918349.

En pratique, lorsque la fixation d'un article fait intervenir un accessoire de fixation, c'est ce dernier que traverse l'organe de fixation mis en oeuvre, et, bien entendu, il est fait en sorte que, de la fixation ainsi faite de cet accessoire de fixation, résulte celle de l'article à fixer.

Par exemple, et cela est le cas dans la demande de brevet français No 2 754 874 mentionnée ci-dessus, l'embase mise en oeuvre comporte, côte à côte, d'un seul tenant, deux portions, une propre à la traversée de l'organe de fixation, l'autre propre au support du collier de serrage concerné.

Mais, en variante, l'accessoire de fixation peut intervenir à la manière d'une simple rondelle de répartition, et l'article à fixer, alors pris en sandwich entre lui et le support à équiper, est lui aussi traversé par l'organe de fixation.

Cela est le cas, par exemple, pour la fixation d'un socle de goulotte à une paroi.

Dans tous les cas, lors de la mise en oeuvre de l'outil utilisé, une difficulté est à surmonter, qui tient à ce qu'il convient de présenter correctement cet outil par rapport à l'accessoire de fixation à fixer.

A défaut, l'organe de fixation éjecté par cet outil pourrait traverser intempestivement cet accessoire de fixation ailleurs qu'à l'endroit normalement prévu pour lui, cet endroit étant usuellement matérialisé par un perçage propre au passage d'un tel organe de fixation.

Une telle implantation défectueuse de l'organe de fixation peut nuire à la qualité et/ou à l'efficacité de la fixation obtenue, au détriment de la pérennité de celle-ci.

Elle peut également entraîner une détérioration rédhibitoire de l'accessoire de fixation concerné.

Or, la présentation correcte de l'outil par rapport à l'accessoire de fixation à fixer mobilise normalement les deux mains de l'opérateur, l'une pour cet outil, l'autre pour cet accessoire de fixation, alors même que, pour un bon maintien de l'outil, cet opérateur doit normalement affecter ses deux mains à celui-ci.

En outre, l'application, conjointement nécessaire, de l'accessoire de fixation à fixer au support à équiper peut corollairement s'avérer malaisée, notamment dans un environnement encombré ou d'accès étroit, comme cela peut être le cas pour la fixation d'un socle de goulotte à une paroi, cette fixation se faisant nécessairement par le fond de ce socle de goulotte.

Dans la demande de brevet français No 2 754 874 mentionnée ci-dessus, il est prévu que, par des moyens d'assujettissement débrayables, l'accessoire de fixation puisse être rapporté par avance sur le nez tubulaire de l'outil, ce qui libère la main de l'opérateur normalement mobilisée pour son maintien.

Mais, en pratique, les moyens d'assujettissement qui y sont proposés sont des moyens d'emmanchement, et ceux-ci nécessitent une application de l'accessoire de fixation au nez tubulaire de l'outil suivant l'axe de celui-ci.

Eu égard aux inévitables tolérances de fabrication, la tenue de l'accessoire de fixation sur ce nez tubulaire, telle qu'elle résulte d'un tel emmanchement, est relativement aléatoire.

En outre, se faisant suivant l'axe du nez tubulaire de l'outil, l'engagement de l'accessoire de fixation sur ce nez tubulaire risque de provoquer un déclenchement intempestif de l'outil, au détriment de la sécurité.

La présente invention a d'une manière générale pour objet une disposition permettant de surmonter ces difficultés, tout en gardant la possibilité d'un engagement de l'accessoire de fixation suivant l'axe de l'outil lorsqu'un tel engagement est envisageable.

De manière plus précise, elle a tout d'abord pour objet un procédé pour la fixation d'un quelconque article à un quelconque support, ce procédé étant du genre suivant lequel on fait intervenir un accessoire de fixation, d'une part, en fixant cet accessoire de fixation au support à l'aide d'un outil présentant un nez tubulaire par lequel il est apte à propulser un organe de fixation à travers lui, et, d'autre part, en faisant en sorte que de la fixation ainsi faite de cet accessoire de fixation résulte celle de l'article à fixer, avec, intervenant entre l'accessoire de fixation et le nez tubulaire de l'outil, des moyens d'assujettissement aptes à permettre de rapporter, par avance, cet accessoire de fixation sur ce nez, et débrayables, et étant d'une manière générale caractérisé en ce qu'on choisit pour moyens d'assujettissement à faire intervenir entre l'accessoire de fixation et le nez tubulaire de l'outil, des moyens d'emboîtement, un premier des organes que constituent cet accessoire de fixation et ce nez tubulaire comportant au moins une lèvre d'engagement tandis que le deuxième comporte au moins une saignée, qui, en section transversale, est au moins pour partie complémentaire de la lèvre d'engagement du premier, et à la faveur de laquelle celui-ci est apte à venir en prise avec lui par cette dernière ; elle a encore pour objet tout accessoire de fixation propre à la mise en oeuvre d'un tel procédé.

Préférentiellement, deux lèvres d'engagement sont mises en oeuvre, et elles sont portées par l'accessoire de fixation.

Ainsi, l'accessoire de fixation suivant l'invention est caractérisé en ce que, pour la mise en oeuvre du procédé précédemment exposé, il présente, en surplomb par rapport à son perçage, au moins deux lèvres d'engagement qui s'étendent chacune sensiblement transversalement par rapport à l'axe de ce perçage.

L'expérience montre, en effet, et les essais confirment, que de telles lèvres d'engagement suffisent avantageusement à un maintien temporaire efficace et sûr d'un tel accessoire de fixation sur le nez tubulaire de l'outil à mettre en oeuvre.

Préférentiellement, également, il est fait en sorte que, si désiré, l'accessoire de fixation puisse être engagé latéralement sur le nez tubulaire de l'outil, c'est-à-dire sensiblement perpendiculairement à l'axe de celui-ci.

Les objets de l'invention, leurs caractéristiques et leurs avantages, ressortiront d'ailleurs de la description qui va suivre, à titre d'exemple, en référence aux dessins schématiques annexés sur lesquels :
la figure 1 est une vue en perspective d'un accessoire de fixation suivant l'invention, vu de dessus ;
la figure 2 en est une vue en plan, suivant la flèche II de la figure 1 ;
la figure 3 en est une vue en coupe axiale, suivant la ligne III-III de la figure 1 ;
la figure 4 en est une autre vue en perspective, vu de dessous ;
la figure 5 est une vue en perspective illustrant la mise en oeuvre de cet accessoire de fixation à l'aide d'un outil ;
la figure 6 est une vue en perspective le montrant fixé sur un support, avec, pris en sandwich entre lui et ce support, un quelconque article à fixer ;
les figures 7 et 8 sont, à échelle différente, des vues en perspective qui, analogues, chacune respectivement, à celles des figures 1 et 4, se rapportent à une variante de réalisation de l'accessoire de fixation suivant l'invention, pour une configuration ouverte de celle-ci ;
la figure 9 est une vue en perspective analogue à celle de la figure 7, pour une configuration fermée de cette variante de réalisation ;
la figure 10 est une vue en perspective qui, analogue à celle de la figure 1, se rapporte à un autre accessoire de fixation suivant l'invention ;
les figures 11 et 12 sont, à échelle différente, des vues en coupe axiale de cet autre accessoire de fixation, suivant, chacune respectivement, les lignes XI-XI et XII-XII de la figure 10 ;
la figure 13 est une vue en perspective analogue à celle de la figure 1, pour un autre accessoire de fixation suivant l'invention ;
la figure 14 est une vue en coupe axiale de cet autre accessoire de fixation, suivant la ligne XIV-XIV de la figure 13 ;
la figure 15 en est une vue en plan, suivant la flèche XV de la figure 14 ;
la figure 16 est une vue en perspective d'une pièce auxiliaire de fixation associée à cet accessoire de fixation et de l'article à fixer attenant à cette pièce auxiliaire de fixation, vus de dessus ;
la figure 17 est une vue partielle en perspective de cette pièce auxiliaire de fixation et de l'article à fixer correspondant, vus de dessous ;
la figure 18 est, à échelle différente, une vue partielle en coupe longitudinale de l'ensemble, suivant la ligne XVIII-XVIII de la figure 17 ;
la figure 19 est une vue en perspective d'un autre accessoire de fixation suivant l'invention et d'un article à fixer avec lequel il ne forme qu'une seule et même pièce ;
la figure 20 est, à échelle différente, une vue en coupe transversale de l'ensemble, suivant la ligne XX-XX de la figure 19.

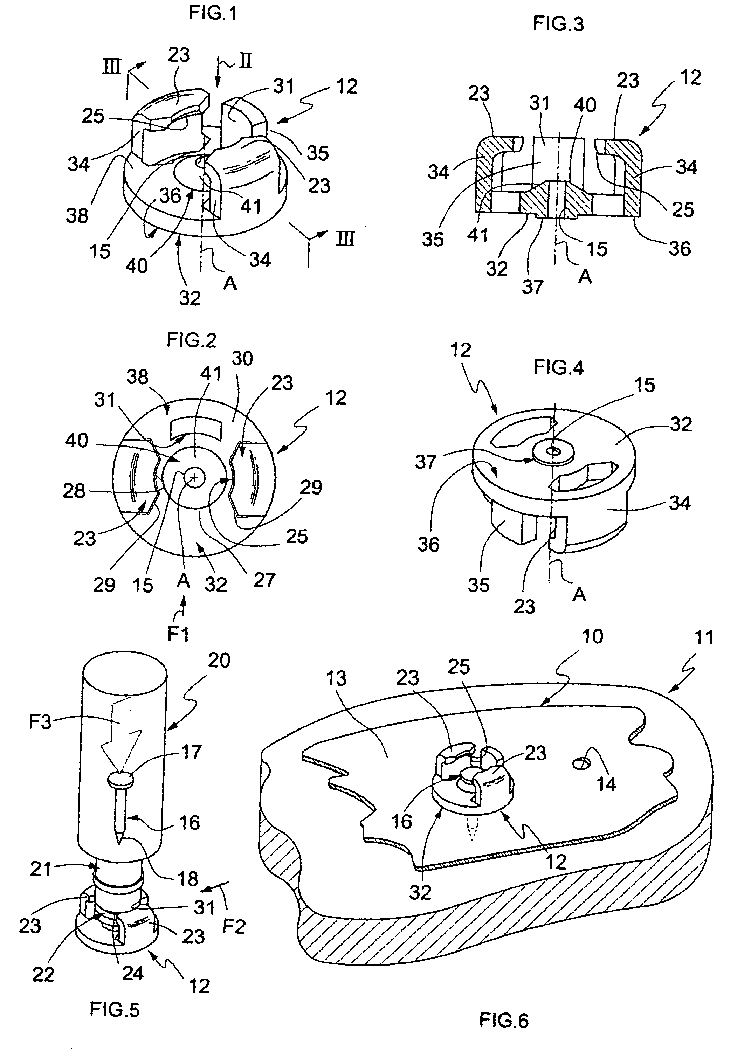

Tel qu'illustré sur ces figures, et ainsi qu'il ressort plus particulièrement de la figure 6, il s'agit, globalement, d'assurer la fixation d'un quelconque article 10 à un quelconque support 11 en faisant intervenir un accessoire de fixation 12.

Les figures 1 à 6 illustrent plus particulièrement, à titre d'exemple, le cas où l'article 10 à fixer doit être pris en sandwich entre l'accessoire de fixation 12 et le support 11 à équiper.

Cet article 10 peut, par exemple, être une goulotte, ou, plus précisément, le socle d'une telle goulotte.

Un tel article 10 ne relevant pas de la présente invention, il ne sera pas décrit ici, et, étant supposé que, s'agissant d'un socle de goulotte, sa fixation se fait par le fond 13 de celui-ci, seule une partie de ce fond 13 a été représentée sur la figure 6.

En pratique, un tel fond 13 présente usuellement en saillie des nervures, mais, étant supposé que la fixation à assurer doit se faire entre ces nervures, celles-ci ont été volontairement omises sur la figure 6.

Pour des raisons qui apparaîtront ci-après, le fond 13 comporte, de place en place, des dégagements 14, de contour circulaire.

Il peut s'agir de trous traversant de part en part ce fond 13, ou de simples avant-trous n'affectant qu'une fraction de son épaisseur.

Quoi qu'il en soit, c'est à la faveur de l'un ou l'autre de ces dégagements 14 que, dans la forme de mise en oeuvre représentée, doit se faire la fixation à assurer.

En pratique, les dégagements 14 peuvent être prévus par avance sur le fond 13 du socle de goulotte à fixer, ou n'être pratiqués qu'in situ sur ce fond 13, lors même de la pose de ce socle de goulotte.

Le support 11 à équiper ne relève pas non plus de la présente invention.

Par exemple, il s'agit d'une quelconque paroi.

De manière connue en soi, l'accessoire de fixation 12 mis en oeuvre pour la fixation d'un article 10 sur un tel support 11 comporte un perçage 15 propre au passage d'un quelconque organe de fixation 16.

Par exemple, cet organe de fixation 16 est un clou, comportant une tête 17 et un fût 18.

De manière connue en soi, également, la fixation de l'accessoire de fixation 12 se fait à l'aide d'un outil 20 présentant un nez tubulaire 21 par lequel il est apte à propulser un tel organe de fixation 16 à travers lui, c'est-à-dire à travers cet accessoire de fixation 12.

Cet outil 20 ne relevant pas, lui aussi, de la présente invention, il ne sera pas non plus décrit ici.

De manière connue en soi, on prévoit, entre l'accessoire de fixation 12 et le nez tubulaire 21 de l'outil 20, des moyens d'assujettissement 22, qui, d'une part, sont aptes à permettre de rapporter, par avance, cet accessoire de fixation 12 sur ce nez tubulaire 21, tel que représenté sur la figure 5, et qui, d'autre part, sont débrayables.

Suivant l'invention, on choisit, pour moyens d'assujettissement 22, des moyens d'emboîtement, un premier des organes que constituent l'accessoire de fixation 12 et le nez tubulaire 21 de l'outil 20 comportant au moins une lèvre d'engagement 23 tandis que le deuxième comporte au moins une saignée 24, qui, en section transversale, est au moins pour partie complémentaire de la lèvre d'engagement 23 du premier, et à la faveur de laquelle celui-ci est apte à venir en prise avec lui par cette dernière.

Dans les formes de réalisation représentées, la saignée 24 est prévue sur le nez tubulaire 21 de l'outil 20, et la lèvre d'engagement 23 sur l'accessoire de fixation 12.

Plus précisément, dans ces formes de réalisation, l'accessoire de fixation 12 suivant l'invention présente, en surplomb par rapport à son perçage 15, au moins une lèvre d'engagement 23, qui s'étend sensiblement transversalement par rapport à l'axe A de ce perçage 15.

Préférentiellement, et cela est le cas dans les formes de réalisation représentées, l'accessoire de fixation 12 suivant l'invention présente, en surplomb par rapport à son perçage 15, au moins deux lèvres d'engagement 23, qui s'étendent chacune sensiblement transversalement par rapport à l'axe A de ce perçage 15.

En pratique, dans les formes de réalisation représentées, seules deux lèvres d'engagement 23 sont prévues.

Globalement dirigées l'une vers l'autre, et globalement coplanaires l'une avec l'autre, ces deux lèvres d'engagement 23 délimitent, au moins localement, un évidement 25, qui donne accès au perçage 15.

Dans les formes de réalisation représentées, cet évidement 25 est lui-même accessible latéralement, c'est-à-dire suivant une direction transversale par rapport à l'axe A du perçage 15, tel que schématisé par une flèche F1 sur la figure 2, à l'une au moins des extrémités 27 des lèvres d'engagement 23.

En pratique, l'évidement 25 ainsi délimité par les lèvres d'engagement 23 a un contour circulaire, et il est coaxial du perçage 15.

En outre, son contour est complémentaire de celui du nez tubulaire 21 de l'outil 20, le contour de ce nez tubulaire 21 étant apprécié au fond de sa saignée 24.

Par exemple, et tel que représenté, la tranche de chacune des lèvres d'engagement 23 forme, dans sa partie médiane, un arc de cercle 28, et celui-ci est précédé par un chanfrein d'engagement 29, du côté au moins de l'extrémité 27 de ces lèvres d'engagement 23.

Par mesure de symétrie, il y a aussi un chanfrein à l'autre des extrémités 30 des lèvres d'engagement 23 dans la forme de réalisation plus particulièrement représentée sur les figures 1 à 6.

Mais, il ne s'agit pas d'un chanfrein d'engagement.

Préférentiellement, en effet, à cette autre extrémité 30 des lèvres d'engagement 23, l'accessoire de fixation 12 suivant l'invention comporte, sensiblement à niveau avec ces lèvres d'engagement 23, une butée 31, pour limiter l'engagement de cet accessoire de fixation 12 sur le nez tubulaire 21 de l'outil 20.

Dans la forme de réalisation plus particulièrement représentée sur ces figures 1 à 6, l'accessoire de fixation 12 suivant l'invention comporte une embase 32, qui présente, dans sa zone médiane, le perçage 15, et sur laquelle font saillie, d'une part, des jambages 34 portant en console les lèvres d'engagement 23, et, d'autre part, entre ces jambages 34, un jambage 35 portant la butée 31.

Par exemple, et tel que représenté, l'embase 32 se réduit à une simple pastille de contour circulaire, et les jambages 34 portant les lèvres d'engagement 23 s'étendent au ras de sa périphérie externe, cependant que le jambage 35 portant la butée 31 s'étend légèrement en retrait par rapport à celle-ci.

Dans la forme de réalisation représentée, l'embase 32 présente, en saillie, sur sa surface inférieure 36, un bossage de positionnement 37, qui entoure le perçage 15, et dont le contour est en pratique complémentaire de celui des dégagements 14 de l'article 10 à fixer.

Dans la forme de réalisation représentée, l'embase 32 présente, en outre, en saillie, sur sa surface supérieure 38, un bossage de renfort 40, qui entoure aussi le perçage 15.

Par exemple, et tel que représenté, la surface supérieure 41 de ce bossage de renfort 40 est globalement convexe, en étant par exemple globalement tronconique.

Pour sa mise en oeuvre, l'accessoire de fixation 12 suivant l'invention est rapporté sur le nez tubulaire 21 de l'outil 20.

Il suffit, pour ce faire, de l'amener en prise, par ses lèvres d'engagement 23, avec la saignée 24 prévue à cet effet sur ce nez tubulaire 21, en l'engageant transversalement sur celui-ci, suivant la flèche F2 de la figure 5, jusqu'à contact de sa butée 31 avec ce nez tubulaire 21, comme représenté sur cette figure 5.

Il suffit, ensuite, l'article 10 à fixer étant maintenu plaqué contre le support 11 à équiper, d'approcher d'un des dégagements 14 de cet article 10 l'outil 20 ainsi équipé d'un accessoire de fixation 12, jusqu'à engager cet accessoire de fixation 12 dans ce dégagement 14 par son bossage de positionnement 37.

Il suffit, enfin, d'actionner l'outil 20, ce qui, tel que schématisé par une flèche F3 sur la figure 5, assure l'éjection d'un organe de fixation 16, la traversée, par celui-ci, de l'organe de fixation 12 et de l'article 10 à fixer, et sa pénétration dans le support 11 sous-jacent, comme représenté sur la figure 6.

Ainsi, de la fixation faite de l'accessoire de fixation 12 par cet organe de fixation 16 résulte, directement, dans ce cas, celle de l'article 10 à fixer.

Une fois cette fixation assurée, l'outil 20 peut être dégagé latéralement de l'accessoire de fixation 12 suivant l'invention, suivant un processus inverse du précédent, ce qui suffit au caractère débrayable de cet accessoire de fixation 12.

En variante, cependant, l'outil 20 peut aussi alors être dégagé frontalement de cet accessoire de fixation 12, à la faveur d'une déformation temporaire de ses lèvres d'engagement 23 et/ou des jambages 34 portant celles-ci.

Pour faciliter, d'ailleurs, un tel dégagement frontal de l'outil 20, l'arête correspondante des lèvres d'engagement 23 peut, si désiré, être biseautée, comme représenté.

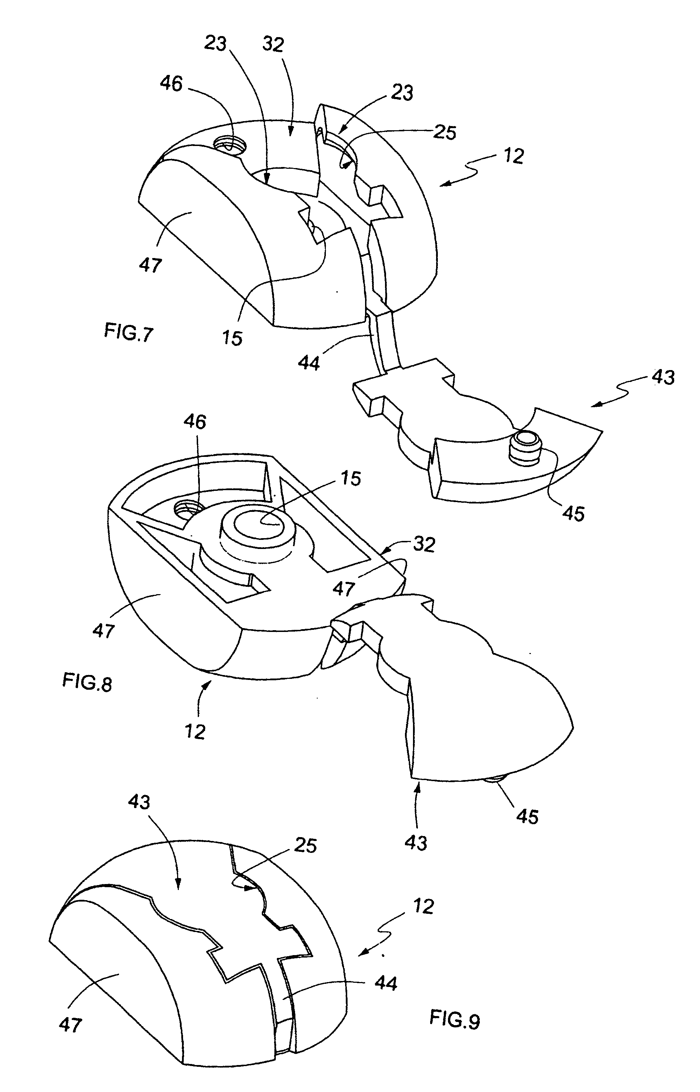

Suivant la forme de réalisation représentée sur les figures 7 à 9, l'accessoire de fixation 12 suivant l'invention comporte un couvercle 43, qui est apte à refermer l'évidement 25, en s'emboîtant dans celui-ci, et en se superposant ainsi à la tête 17 de l'organe de fixation 16 mis en oeuvre.

Ainsi se trouve reconstituée, au niveau de cet organe de fixation 16, toute l'isolation éventuellement souhaitable.

Par exemple, et tel que représenté, le couvercle 14 est relié d'un seul tenant à l'embase 32 par une languette 44, et, pour son maintien en position de fermeture, il porte en saillie un ergot 45 par lequel il est apte à venir en prise avec un logement 46 prévu de manière complémentaire à cet effet sur cette embase 32.

Dans la forme de réalisation représentée, l'embase 32 est abattue, extérieurement, par des méplats 47 parallèles, ce qui en diminue l'emprise dans l'article 10 à fixer, au bénéfice du volume disponible dans celui-ci.

Pour le reste, les dispositions sont globalement du même type que celles précédemment décrites.

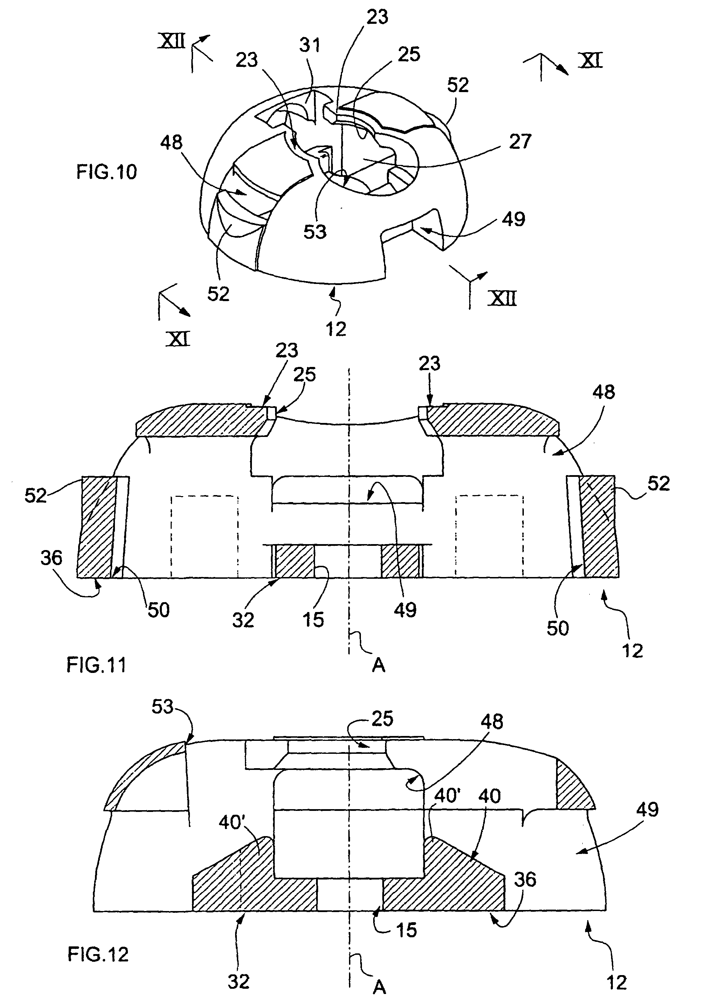

Dans la forme de réalisation représentée sur les figures 10 à 12, l'accessoire de fixation 12 suivant l'invention comporte, intérieurement, au moins un passage 48, 49, qui, pour le cheminement d'un quelconque lien non représenté, en pratique un collier de serrage, s'étend globalement transversalement par rapport au perçage 15, et, plus précisément, par rapport à l'axe A de ce perçage 15, entre ce perçage 15 et les lèvres d'engagement 23.

Par exemple, et tel que représenté, cet accessoire de fixation 12 comporte, en croix, deux passages 48, 49, disposés chacun respectivement à deux niveaux différents.

Dans la forme de réalisation représentée, l'un, au moins, des passages 48, 49 est sinueux, pour réduire au mieux l'encombrement en hauteur de l'accessoire de fixation 12 suivant l'invention.

En pratique, il s'agit du passage 49 qui intervient au niveau inférieur.

De fait, ce passage 49 débouche à l'extérieur au ras avec la surface inférieure 36 de l'embase 32, en sorte que, dans sa zone médiane, le bossage de renfort 40 entourant le perçage 15 interfère transversalement sur son parcours.

Par exemple, et tel que représenté, ce bossage de renfort 40 se réduit à deux saillies 40', qui interviennent chacune respectivement de part et d'autre du perçage 15 sur le trajet du passage 49, et l'embase 32 est largement évidée par des ajours 50 en croix avec ces saillies 40'.

Corollairement, dans la forme de réalisation représentée, l'autre passage 48 de l'accessoire de fixation 12 suivant l'invention, c'est-à-dire celui intervenant au niveau supérieur, est globalement rectiligne.

Dans la forme de réalisation représentée, ce passage 48, qui est en pratique le passage préférentiel, est signalé, à l'extérieur, par des becquets 52 qui interviennent à ses débouchés.

Pour le reste, les dispositions sont globalement du même type que celles précédemment décrites.

Cependant, à l'extrémité 27 des lèvres d'engagement 23 opposée à celle où intervient la butée 31, l'évidement 25 débouche, dans la forme de réalisation représentée, dans un autre évidement 53, dont l'amplitude, plus grande que la sienne, à la manière des trous de serrure, est suffisante pour permettre un engagement axial du nez tubulaire 21 de l'outil 20, et c'est à la faveur de cet évidement 53 qu'est donné, latéralement, à ce nez tubulaire 21, un accès à l'évidement 25, et, donc, aux lèvres d'engagement 23.

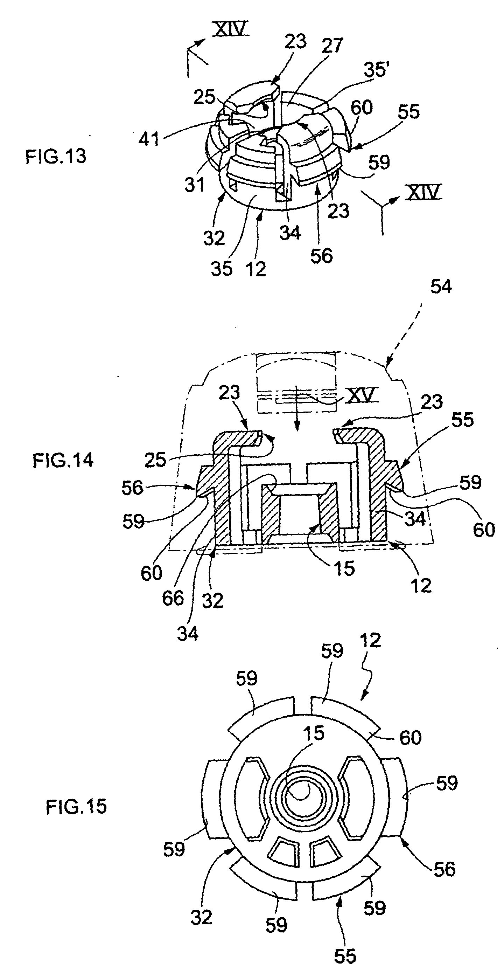

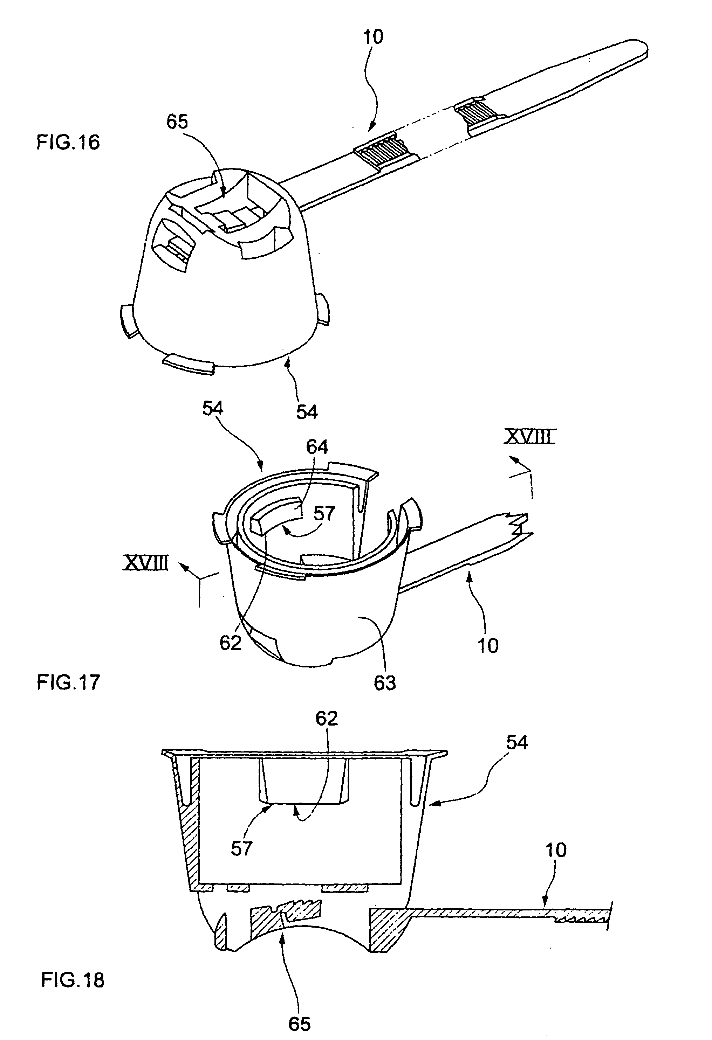

Dans la forme de réalisation représentée sur les figures 13 à 18, il est associé, à l'accessoire de fixation 12 suivant l'invention, une pièce de fixation auxiliaire 54, dont est solidaire l'article 10 à fixer, figures 16 à 18, et, entre lui et cette pièce de fixation auxiliaire 54, sont prévus des moyens d'assujettissement 55.

Par exemple, et tel que représenté, l'article 10 à fixer est un collier de serrage.

Un tel collier de serrage étant bien connu par lui-même, il ne sera pas décrit ici.

Dans la forme de réalisation représentée, les moyens d'assujettissement 55 prévus entre l'accessoire de fixation 12 et la pièce de fixation auxiliaire 54 comportent, sur cet accessoire de fixation 12, des moyens d'encliquetage 56, et, sur la pièce de fixation auxiliaire 54, des moyens d'encliquetage 57 complémentaires des moyens d'encliquetage 56 précédents.

A la manière des dispositions décrites en référence aux figures 1 à 6, l'accessoire de fixation 12 comporte une embase 32, de contour circulaire, avec, en saillie sur celle-ci, des jambages 34 en bout desquels interviennent en console les lèvres d'engagement 23.

Comme précédemment; également, à l'extrémité 30 de ces lèvres d'engagement 23 intervient au moins un jambage 35, portant la butée 31 associée.

Mais, dans la forme de réalisation représentée, à l'autre extrémité 27 des lèvres d'engagement 23 intervient, également, au moins un jambage 35', dont la hauteur est moindre que celle du jambage 35 précédent, pour laisser latéralement un libre accès à l'évidement 25 formé par les lèvres d'engagement 23.

Par exemple, deux jambages 35 sont prévus à l'extrémité 30 des lèvres d'engagement 23, et deux jambages 35' à leur extrémité 27.

Dans la forme de réalisation représentée, tous ces jambages 34, 35 et 35' interviennent suivant une même circonférence, à ras avec la périphérie externe de l'embase 32.

En outre, dans cette forme de réalisation, les moyens d'encliquetage 56 que comporte l'accessoire de fixation 12 suivant l'invention font saillie sur sa face extérieure, et les moyens d'encliquetage 57 que comporte corollairement la pièce de fixation auxiliaire 54 associée font saillie sur la surface intérieure de celle-ci.

En pratique, les moyens d'encliquetage 56 s'étendent le long du pourtour de l'accessoire de fixation 12, de manière continue ou discontinue.

Par exemple, et tel que représenté, ces moyens d'encliquetage 56 sont formés de manière discontinue par des crans 59, qui affectent, chacun respectivement, les jambages 34, 35 et 35' de cet accessoire de fixation 12, en s'étendant tous en saillie à un même niveau sur la surface extérieure de ceux-ci, et dont chacun est précédé par un chanfrein d'engagement 60.

Corollairement, dans la forme de réalisation représentée, la pièce de fixation auxiliaire 54 associée à l'accessoire de fixation 12 est en forme générale de cloche, ou de chape, et elle est ainsi apte à coiffer cet accessoire de fixation 12.

Par exemple, elle s'étend alors sur toute la hauteur de l'accessoire de fixation 12, en recouvrant complètement celui-ci, tel que schématisé en traits interrompus sur la figure 14.

Dans la forme de réalisation représentée, les moyens d'encliquetage 57 que comporte cette pièce de fixation auxiliaire 54 sont également formés de manière discontinue par des crans 62, qui font saillie de place en place sur la paroi latérale 63 de cette pièce de fixation auxiliaire 54 sur la surface intérieure de celle-ci, et qui, préférentiellement, sont chacun précédés par un chanfrein d'engagement 64.

Dans la forme de réalisation représentée, l'article 10 à fixer est d'un seul tenant avec la pièce de fixation auxiliaire 54, en formant qu'une seule et même pièce avec celle-ci.

S'agissant, comme en l'espèce, d'un collier de serrage, la pièce de fixation auxiliaire 54 forme, à sa partie sommitale, suivant des dispositions connues par elles-mêmes et ne relevant pas de la présente invention, une tête de fermeture 65 propre à une fermeture en boucle de ce collier de serrage sur lui-même.

Suivant des dispositions du type de celles décrites précédemment, l'accessoire de fixation 12 suivant l'invention est, d'abord, rapporté sur le support 11 à équiper.

La pièce de fixation auxiliaire 54 est ensuite rapportée, par encliquetage, sur cet accessoire de fixation 12.

Par l'intermédiaire, d'une part, de cette pièce de fixation auxiliaire 54, et, d'autre part, de l'accessoire de fixation 12, l'article 10 à fixer se trouve alors lui-même dûment fixé au support 11 à équiper, comme recherché.

Pour le reste, les dispositions sont globalement du même type que les précédentes.

Il est à noter, toutefois, que, dans la forme de réalisation représentée, il y a, sur la surface supérieure 38 de l'embase 32, autour du perçage 15, un cratère 66.

Autrement dit, et à l'inverse des dispositions précédentes, ce perçage 15 est, à son débouché correspondant, entouré par une surface globalement concave, au lieu d'être entouré par une surface globalement convexe.

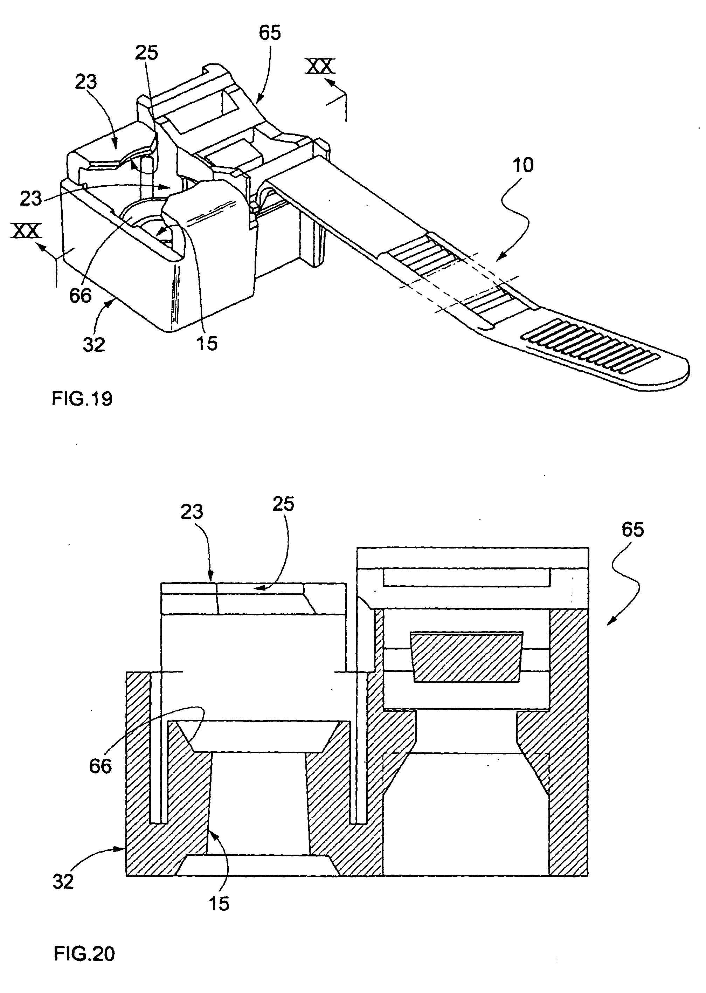

Dans la forme de réalisation représentée sur les figures 19 et 20, l'accessoire de fixation 12 suivant l'invention est accolé à l'article 10 à fixer, en l'espèce, un collier de serrage, comme précédemment, en ne formant qu'une seule et même pièce avec celui-ci.

Par exemple, et tel que représenté, l'accessoire de fixation 12 suivant l'invention a, globalement, un contour parallélépipédique, à la manière de la tête de fermeture 65 de ce collier de serrage.

Autrement dit, son embase 32, a, alors, en plan, un contour rectangulaire.

Pour le reste, les dispositions sont globalement du même type que celles précédemment décrites.

Suivant une variante de réalisation non représentée, les jambages 34 portant les lèvres d'engagement 23 de l'accessoire de fixation 12 suivant l'invention et/ou ces lèvres d'engagement 23 elles-mêmes sont suffisamment déformables élastiquement pour autoriser au nez tubulaire 21 de l'outil 20 à mettre en oeuvre un accès frontal direct à l'évidement 25 délimité par ces lèvres d'engagement 23.

En particulier, si, dans les formes de réalisation plus particulièrement décrites et représentées, ce sont des moyens d'engagement de type mâle qui sont prévus sur l'accessoire de fixation, pour coopération avec des moyens d'engagement de type femelle prévus de manière complémentaire sur le nez tubulaire de l'outil correspondant, une disposition inverse peut tout aussi bien être adoptée.

## Revendications

1. Procédé pour la fixation d'un quelconque article à un quelconque support, du genre suivant lequel on fait intervenir un accessoire de fixation (12), d'une part, en fixant cet accessoire de fixation (12) au support (11) à l'aide d'un outil (20) présentant un nez tubulaire (21) par lequel il est apte à propulser un organe de fixation (16) à travers lui, et, d'autre part, en faisant en sorte que de la fixation ainsi faite de cet accessoire de fixation (12) résulte celle de l'article (10) à fixer, avec, intervenant entre l'accessoire de fixation (12) et le nez tubulaire (21) de l'outil (20), des moyens d'assujettissement (22) aptes à permettre de rapporter, par avance, cet accessoire de fixation (12) sur ce nez tubulaire (21), et débrayables, **caractérisé en ce qu'**on choisit pour moyens d'assujettissement (22) des moyens d'emboîtement, un premier des organes que constituent l'accessoire de fixation (12) et le nez tubulaire (21) de l'outil (20) comportant au moins une lèvre d'engagement (23) tandis que le deuxième comporte au moins une saignée (24), qui, en section transversale, est au moins pour partie complémentaire de la lèvre d'engagement (23) du premier, et à la faveur de laquelle celui-ci est apte à venir en prise avec lui par cette dernière.

2. Procédé suivant la revendication 1, **caractérisé en ce qu'**on fait en sorte que l'accessoire de fixation (12) puisse être engagé latéralement sur le nez tubulaire (21) de l'outil (20), c'est-à-dire sensiblement perpendiculairement à l'axe de celui-ci.

3. Accessoire de fixation pour la mise en oeuvre d'un procédé suivant l'une quelconque des revendications 1, 2, du genre comportant un perçage (15) propre au passage d'un quelconque organe de fixation (16), **caractérisé en ce qu'**il présente, en surplomb par rapport à son perçage (15), au moins une lèvre d'engagement (23), qui s'étend sensiblement transversalement par rapport à l'axe (A) de ce perçage (15).

4. Accessoire de fixation suivant la revendication 3, **caractérisé en ce qu'**il présente, en surplomb par rapport à son perçage (15), au moins deux lèvres d'engagement (23), qui s'étendent chacune sensiblement transversalement par rapport à l'axe (A) de ce perçage (15).

5. Accessoire de fixation suivant la revendication 4, **caractérisé en ce que**, globalement dirigées l'une vers l'autre, et globalement coplanaires l'une avec l'autre, les deux lèvres d'engagement (23) délimitent, au moins localement, un évidement (25), qui donne accès au perçage (15).

6. Accessoire de fixation suivant la revendication 5, **caractérisé en ce que**, à Tune au moins des extrémités (27) des lèvres d'engagement (23), l'évidement (25) est lui-même accessible latéralement.

7. Accessoire de fixation suivant l'une quelconque des revendications 5, 6, **caractérisé en ce que** l'évidement (25) délimité par les lèvres d'engagement (23) a un contour circulaire.

8. Accessoire de fixation suivant l'une quelconque des revendication 4 à 7, **caractérisé en ce qu'**il comporte une embase (32), qui présente le perçage (15), et sur laquelle font saillie des jambages (34) portant en console les lèvres d'engagement (23).

9. Accessoire de fixation suivant la revendication 8, **caractérisé en ce que** l'embase (32) présente, en saillie, sur sa surface inférieure (36), un bossage de positionnement (37), qui entoure le perçage (15).

10. Accessoire de fixation suivant l'une quelconque des revendications 8, 9, **caractérisé en ce que** l'embase (32) présente, en saillie, sur sa surface supérieure (38), un bossage de renfort (40), qui entoure le perçage (15).

11. Accessoire de fixation suivant la revendication 10, **caractérisé en ce que** la surface supérieure (41) du bossage de renfort (40) est globalement convexe.

12. Accessoire de fixation suivant tune quelconque des revendications 8 à 10, **caractérisé en ce que**, sur la surface supérieure (38) de l'embase (32), il y a un cratère (66) autour du perçage (15).

13. Accessoire de fixation suivant la revendication 5, **caractérisé en ce que**, à l'autre extrémité (30) des lèvres d'engagement (23), il comporte, sensiblement à niveau avec ces lèvres d'engagement (23), une butée (31).

14. Accessoire de fixation suivant les revendications 8 et 13, prises conjointement, **caractérisé en ce que** sur l'embase (32) fait saillie un jambage (35) portant la butée (31).

15. Accessoire de fixation suivant la revendication 5, **caractérisé en ce qu'**il comporte un couvercle (43), qui est apte à refermer l'évidement (25), en s'emboîtant dans celui-ci.

16. Accessoire de fixation suivant l'une quelconque des revendications 4 à 14, **caractérisé en ce qu'**il comporte, intérieurement, au moins un passage (48, 49), pour le cheminement d'un quelconque lien.

17. Accessoire de fixation suivant la revendication 16, **caractérisé en ce que** le passage (48, 49) s'étend globalement transversalement par rapport au perçage (15), entre ce perçage (15) et les lèvres d'engagement (23).

18. Accessoire de fixation suivant-l'une quelconque des revendications 16, 17, **caractérisé en ce qu'**il comporte, en croix, deux passages (48, 49), disposés chacun respectivement à deux niveaux différents.

19. Accessoire de fixation suivant l'une quelconque des revendications 16 à 18, **caractérisé en ce que** l'un au moins des passages (48, 49) est sinueux.

20. Accessoire de fixation suivant l'une quelconque des revendications 4 à 19, **caractérisé en ce qu'**il lui est associé une pièce de fixation auxiliaire (54), dont est solidaire l'article (10) à fixer, et, entre lui et cette pièce de fixation auxiliaire (54), sont prévus des moyens d'assujettissement (55).

21. Accessoire de fixation suivant la revendication 20, **caractérisé en ce que** les moyens d'assujettissement (55) comportent, sur l'accessoire de fixation (12), des moyens d'encliquetage (56), et, sur la pièce de fixation auxiliaire (54), des moyens d'encliquetage (57) complémentaires des moyens d'encliquetage (56) précédents.

22. Accessoire de fixation suivant la revendication 21, **caractérisé en ce que** les moyens d'encliquetage (56) qu'il comporte font saillie sur sa face extérieure, et les moyens d'encliquetage (57) que comporte la pièce de fixation auxiliaire (54) associée font saillie sur la surface intérieure de celle-ci.

23. Accessoire de fixation suivant la revendication 22, **caractérisé en ce que** les moyens d'encliquetage (56) s'étendent le long de son pourtour, de manière continue ou discontinue.

24. Accessoire de fixation suivant l'une quelconque des revendications 20 à 22, **caractérisé en ce que** la pièce de fixation auxiliaire (54) qui lui est associée est en forme de générale de cloche, ou de chape, et elle est ainsi apte à le coiffer.

25. Accessoire de fixation suivant l'une quelconque des revendications 4 à 19, **caractérisé en ce qu'**il est accolé à l'article (10) à fixer, en ne formant qu'une seule et même pièce avec celui-ci.

## Patentansprüche

1. Verfahren zur Befestigung eines beliebigen Artikels an einem beliebigen Träger, bei dem man ein Befestigungszubehör (12) verwendet, indem man einerseits dieses Befestigungszubehör (12) an dem Träger (11) mit Hilfe eines Werkzeugs (20) befestigt, das eine rohrförmige Nase (21) aufweist, mit dem es ein Befestigungsorgan (16) durch dieses treiben kann, und indem andererseits so vorgegangen wird, daß sich aus der auf diese Weise vorgenommenen Befestigung dieses Befestigungszubehörs (12) die des zu befestigenden Artikels (10) ergibt, wobei zwischen dem Befestigungszubehör (12) und der rohrförmigen Nase (21) des Werkzeugs (20) Anbringungsmittel (22) verwendet werden, die es gestatten, dieses Befestigungszubehör (12) im Voraus an dieser rohrförmigen Nase (21) anzubringen, und auskuppelbar sind, **dadurch gekennzeichnet, daß** man als Anbringungsmittel (22) Einsteckmittel verwendet, wobei ein erstes der Organe, die das Befestigungszubehör (12) und die rohrförmige Nase (21) des Werkzeugs (20) bilden, mindestens eine Einstecklippe (23) aufweist, während das zweite mindestens eine Nut (24) aufweist, die im Querschnitt mindestens zum Teil zu der Einstecklippe (23) des ersten komplementär ist und über die dieses mit ihm über letztere in Eingriff kommen kann.

2. Verfahren nach Anspruch 1, **dadurch gekennzeichnet, daß** man so vorgeht, daß das Befestigungszubehör (12) auf die rohrförmige Nase (21) des Werkzeugs seitlich aufgesteckt werden kann, d.h. im wesentlichen senkrecht zu dessen Achse.

3. Befestigungszubehör für die Durchführung eines Verfahrens nach einem der Ansprüche 1, 2, umfassend eine Bohrung (15), die für den Durchgang eines beliebigen Befestigungsorgans (16) geeignet ist, **dadurch gekennzeichnet, daß** es, bezüglich seiner Bohrung (15) überhängend, mindestens eine Einstecklippe (23) aufweist, die sich im wesentlichen quer zur Achse (A) dieser Bohrung (15) erstreckt.

4. Befestigungszubehör nach Anspruch 3, **dadurch gekennzeichnet, daß** es, bezüglich seiner Bohrung (15) überhängend, mindestens zwei Einstecklippen (23) aufweist, die sich jeweils im wesentlichen quer zur Achse (A) dieser Bohrung (15) erstrecken.

5. Befestigungszubehör nach Anspruch 4, **dadurch gekennzeichnet, daß** die beiden insgesamt aufeinander zu gerichteten und insgesamt zueinander koplanaren Einstecklippen (23) mindestens örtlich eine Aussparung (25) begrenzen, die die Bohrung (15) zugänglich macht.

6. Befestigungszubehör nach Anspruch 5, **dadurch gekennzeichnet, daß** die Aussparung (25) mindestens an einem der Enden (27) der Einstecklippen (23) ihrerseits seitlich zugänglich ist.

7. Befestigungszubehör nach einem der Ansprüche 5, 6, **dadurch gekennzeichnet, daß** die durch die Einstecklippen (23) begrenzte Aussparung (25) einen kreisförmigen Umriß hat.

8. Befestigungszubehör nach einem der Ansprüche 4 bis 7, **dadurch gekennzeichnet, daß** es einen Sockel (32) besitzt, der die Bohrung (15) aufweist und an dem Schenkel (34) vorstehen, die konsolenartig die Einstecklippen (23) tragen.

9. Befestigungszubehör nach Anspruch 8, **dadurch gekennzeichnet, daß** der Sockel (32) auf seiner Unterseite (36) vorstehend eine Positionierungserhebung (37) aufweist, die die Bohrung (15) umgibt.

10. Befestigungszubehör nach einem der Ansprüche 8, 9, **dadurch gekennzeichnet, daß** der Sockel (32) auf seiner Oberseite (38) vorstehend eine Verstärkungserhebung (40) aufweist, die die Bohrung (15) umgibt.

11. Befestigungszubehör nach Anspruch 10, **dadurch gekennzeichnet, daß** die Oberseite (41) der Verstärkungserhebung (40) insgesamt konvex ist.

12. Befestigungszubehör nach einem der Ansprüche 8 bis 10, **dadurch gekennzeichnet, daß** auf der Oberseite (38) des Sokkels (32) um die Bohrung (15) herum eine Einsenkung (66) vorgesehen ist.

13. Befestigungszubehör nach Anspruch 5, **dadurch gekennzeichnet, daß** es am anderen Ende (30) der Einstecklippen (23) im wesentlichen auf Höhe mit diesen Einstecklippen (23) einen Anschlag (31) aufweist.

14. Befestigungszubehör nach den Ansprüchen 8 und 13 zusammen, **dadurch gekennzeichnet, daß** auf dem Sockel (32) Schenkel (35) vorsteht, der den Anschlag (31) trägt.

15. Befestigungszubehör nach Anspruch 5, **dadurch gekennzeichnet, daß** es einen Deckel (43) besitzt, der die Aussparung (25) verschließen kann, indem er in diese eingesteckt wird.

16. Befestigungszubehör nach einem der Ansprüche 4 bis 14, **dadurch gekennzeichnet, daß** es innen mindestens einen Durchgang (48, 49) für die Führung eines beliebigen Bandes besitzt.

17. Befestigungszubehör nach Anspruch 16, **dadurch gekennzeichnet, daß** der Durchgang (48, 49) sich insgesamt quer zur Bohrung (15) zwischen dieser Bohrung (15) und den Einstecklippen (23) erstreckt.

18. Befestigungszubehör nach einem der Ansprüche 16, 17, **dadurch gekennzeichnet, daß** es kreuzweise zwei Durchgänge (48, 49) aufweist, die in zwei verschiedenen Höhen angeordnet sind.

19. Befestigungszubehör nach einem der Ansprüche 16 bis 18, **dadurch gekennzeichnet, daß** mindestens einer der Durchgänge (48, 49) gewunden ist.

20. Befestigungszubehör nach einem der Ansprüche 4 bis 19, **dadurch gekennzeichnet, daß** ihm ein Hilfsbefestigungsteil (54) zugeordnet ist, mit dem der zu befestigende Artikel (10) fest verbunden ist, und zwischen diesem und dem Hilfsbefestigungsteil (54) Anbringungsmittel (55) vorgesehen sind.

21. Befestigungszubehör nach Anspruch 20, **dadurch gekennzeichnet, daß** die Anbringungsmittel (55) auf dem Befestigungszubehör (12) Einklinkmittel (56) und auf dem Hilfsbefestigungsteil (54) zu den vorhergehenden Einklinkmitteln (56) ergänzende Einklinkmittel (57) aufweisen.

22. Befestigungszubehör nach Anspruch 21, **dadurch gekennzeichnet, daß** die Einklinkmittel (56), die es aufweist, auf seiner Außenseite vorstehen und die Einklinkmittel (57), die das zugeordnete Hilfsbefestigungsteil (54) aufweist, auf der Innenfläche von diesem vorstehen.

23. Befestigungszubehör nach Anspruch 22, **dadurch gekennzeichnet, daß** die Einklinkmittel (56) sich kontinuierlich oder unkontinuierlich längs seines Umfangs erstrecken.

24. Befestigungszubehör nach einem der Ansprüche 20 bis 22, **dadurch gekennzeichnet, daß** das Hilfsbefestigungsteil (54), das ihm zugeordnet ist, allgemein glockenförmig oder gabelförmig ist und auf diese Weise geeignet ist, es zu bedekken.

25. Befestigungszubehör nach einem der Ansprüche 4 bis 19, **dadurch gekennzeichnet, daß** es an den zu befestigenden Artikel (10) angesetzt ist, indem es mit diesem nur ein und dasselbe Stück bildet.

## Claims

1. Method for fixing any article to any support, of the type according to which a fixing accessory (12) is used on the one hand, fixing this fixing accessory (12) to the support (11) with the help of a tool (20) having a tubular nose (21) by which it is able to propel a fixing organ (16) across it and, on the other hand, causing the thus-achieved fixing of this fixing accessory (12) to result in that of the article (10) to be fixed, with, occurring between the fixing accessory (12) and the tubular nose (21) of the tool (20), fastening means (22) able to permit the addition, by advance, of this fixing accessory (12) onto this tubular nose (21), and releasable, **characterized in that** there is chosen for fastening means (22) housing means, a first of the organs comprised by the fixing accessory (12) and the tubular nose (21) of the tool (20) including at least one engagement lip (23) while the second includes at least one groove (24) which, in transverse section, at least in part complements the engagement lip (23) of the first, and in favour of which the first is able to engage with the second by this groove.

2. Method according to claim 1, **characterized in that** the fixing accessory (12) is enabled to be engaged laterally on the tubular nose (21) of the tool (20), that is to say more or less perpendicular to the axis thereof.

3. Fixing accessory for putting into practice a method according to any one of claims 1, 2, of the type including a bore (15) suitable for the passage of any fixing organ (16), **characterized in that** it has, overhanging relative to its bore (15), at least one engagement lip (23) which extends more or less transversely relative to the axis (A) of this bore (15).

4. Fixing accessory according to claim 3, **characterized in that** it has, overhanging relative to its bore (15), at least two engagement lips (23) which each extend more or less transversely relative to the axis (A) of this bore (15).

5. Fixing accessory according to claim 4, **characterized in that**, globally directed one towards the other, and globally coplanar one with the other, the two engagement lips (23) delimit, at least locally, a recess (25), which gives access to the bore (15).

6. Fixing accessory according to claim 5, **characterized in that**, at at least one of the ends (27) of the engagement lips (23), the recess (25) is itself laterally accessible.

7. Fixing accessory according to any one of claims 5, 6, **characterized in that** the recess (25) delimited by the engagement lips (23) has a circular contour.

8. Fixing accessory according to any one of claims 4 to 7, **characterized in that** it includes a base (32) which contains the bore (15) and from which project supports (34) carrying the engagement lips (23) at their neck.

9. Fixing accessory according to claim 8, **characterized in that** the base (32) has, projecting, on its lower surface (36), a positioning collar (37), which encloses the bore (15).

10. Fixing accessory according to any one of claims 8, 9, **characterized in that** the base (32) has, projecting, on its lower surface (38), a reinforcing collar (40), which encloses the bore (15).

11. Fixing accessory according to claim 10, **characterized in that** the upper surface (41) of the reinforcing collar (40) is globally convex.

12. Fixing accessory according to any one of claims 8 to 10, **characterized in that**, on the upper surface (38) of the base (32), there is a crater (66) around the bore (15).

13. Fixing accessory according to claim 5, **characterized in that**, at the other end (30) of the engagement lips (23), it includes, more or less at the level of these engagement lips (23), a block (31).

14. Fixing accessory according to claims 8 and 13, taken together, **characterized in that** a support (35) bearing the block (31) projects from the base (32).

15. Fixing accessory according to claim 5, **characterized in that** it includes a cover (43) which is able to close the recess (25), housing itself in the latter.

16. Fixing accessory according to any one of claims 4 to 14, **characterized in that** it includes, inside, at least one passage (48, 49) for the advance of any connection.

17. Fixing accessory according to claim 16, **characterized in that** the passage (48, 49) extends globally transversely relative to the bore (15), between this bore (15) and the engagement lips (23).

18. Fixing accessory according to any one of claims 16, 17, characterized that it includes, crossing, two passages (48, 49) each positioned respectively at two different levels.

19. Fixing accessory according to any one of claims 16 to 18, **characterized in that** at least one of the passages (48, 49) is sinuous.

20. Fixing accessory according to any one of claims 4 to 19, **characterized in that** combined with it is an auxiliary fixing piece (54) with which the article (10) to be fixed is integral, and, between it and this auxiliary fixing piece (54), fastening means (55) are provided.

21. Fixing accessory according to claim 20, **characterized in that** the fastening means (55) include, on the fixing accessory (12), detent means (56) and, on the auxiliary fixing piece (54), detent means (57) complementing the preceding blocking means (56).

22. Fixing accessory according to claim 21, **characterized in that** the detent means (56) which it includes project from its outer face, and the detent means (57) which the auxiliary fixing piece (54) includes project from the interior surface thereof.

23. Fixing accessory according to claim 22, **characterized in that** the detent means (56) extend along its periphery, continuously or non-continuously.

24. Fixing accessory according to any one of claims 20 to 22, **characterized in that** the auxiliary fixing piece (54) which is combined with it has the general form of a bell, or lid, and it is thus able to cap it.

25. Fixing accessory according to any one of claims 4 to 19, **characterized in that** it is placed alongside the article (10) to be fixed, forming only one and the same piece with the latter.
